Europäisches Patentamt

European Patent Office

Office européen des brevets

(19)

(11) Veröffentlichungsnummer: **0 151 208**
**B1**

# EUROPÄISCHE PATENTSCHRIFT

(12)

(45) Veröffentlichungstag der Patentschrift:
**11.05.88**

(21) Anmeldenummer: **84101343.6**

(22) Anmeldetag: **09.02.84**

(51) Int. Cl.⁴: **B 62 D 11/04**, B 60 K 23/00

(54) **Steuergerät, insbesondere für ein Kettenfahrzeug.**

(43) Veröffentlichungstag der Anmeldung:
**14.08.85 Patentblatt 85/33**

(45) Bekanntmachung des Hinweises auf die Patenterteilung:
**11.05.88 Patentblatt 88/19**

(84) Benannte Vertragsstaaten:
**AT CH DE FR LI**

(56) Entgegenhaltungen:
**WO - A - 80/00240**

**ÖLHYDRAULIK UND PNEUMATIK, Band 20, Nr. 12, 1976, Mainz; E. GÖLLNER "Zuverlässigkeiterhöhung hydraulischer Systeme durch die Anwendung von Redundanz", Seiten 829-833**

(73) Patentinhaber: **MOOG GmbH, Hanns-Klemm-Strasse 28, D-7030 Böblingen (DE)**

(72) Erfinder: **von Braun, Erik, Friedrich-Ebert-Strasse 7, D-7032 Sindelfingen (DE)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

# Beschreibung

Die vorliegende Erfindung bezieht sich auf ein bekanntes Steuergerät, insbesondere für ein Kettenfahrzeug, nach dem Oberbegriff des Anspruchs 1.

Seit geraumer Zeit ist der Fachwelt ein Steuergerät für ein Kettenfahrzeug bekannt, wie es von der Anmelderin gefertigt wird. Das Steuergerät dient zur elektrohydraulischen Fahrtgeschwindigkeitssteuerung und Kurvensteuerung einer Pistenraupe, die zwei von einem Motor angetriebene Hydraulikpumpen sowie zwei Antriebseinheiten aufweist, die mit den Hydraulikpumpen in Strömungsverbindung stehen. Die Antriebseinheiten bestehen aus einem rechten und einem linken Hydromotor, wobei jeder Hydromotor eine Antriebskette in Bewegung versetzt. Eine Lenkeinrichtung, die als Lenkrad mit einem mit dem Lenkrad verbundenen Lenkgeber ausgebildet ist, erzeugt ein Lenksignal, das dem Steuergerät zugeführt wird. Das Steuergerät erzeugt in Abhängigkeit von diesem Lenksignal zwei Lenkströme, die eine entgegengesetzte Verstellung der rechten und der linken Hydraulikpumpe mittels der Verstelleinrichtungen, die die Hydraulikdurchflussmenge der Hydraulikpumpen in Abhängigkeit von dem Steuergerät empfangenen Lenksignalen steuern, bewirken. Darüberhinaus wird dem Steuergerät ein Signal zugeführt, das einem Geschwindigkeitssignal entspricht. Entsprechend diesem Geschwindigkeitssignal fürt das Steuergerät zwei weitere Steuerströme der rechten und linken Verstelleinrichtung zu, die eine gleichsinnige Verstellung der Hydraulikpumpen bewirken. Mit anderen Worten, es entspricht die Antriebsgeschwindigkeit der rechten und linken Antriebseinheit jeweils der durch die zugehörige Hydraulikpumpe geförderten Hydraulikdurchflussmenge, die wiederum proportional zu der den jeweiligen Verstelleinrichtungen zugeführten Summe bzw. Differenz des Fahrtgeschwindigkeitssignales und des Lenksignales sind. Wenn bei dem bekannten Steuergerät eine Unterbrechung des das Fahrtgeschwindigkeitssignal zu einer Verstelleinrichtung übertragenden Signalweges auftritt, so führt dies zwangsläufig zu einer schlagartigen Verstellung dieser Verstelleinrichtung, die wiederum eine schlagartige Abbremsung der zugeordneten Antriebseinheit nach sich zieht. Bei einem derartigen Steuergerät sind die Verstelleinrichtungen sowie die Fahrtgeschwindigkeitssignale und die Lenksignale so dimensioniert, dass bei einem maximalen Lenkeinschlag die Wirkung des Lenksignals ebenso gross ist wie diejenige des Fahrtsignals. Dementsprechend führt eine Unterbrechung des Signalweges für das Fahrtsignal einer Verstelleinrichtung zu einer Kurvenfahrt des Kettenfahrzeugs um die bei Geradeausstellung der Lenkung des Kettenfahrzeugs nunmehr stillstehende Antriebskette auf der Seite der Verstelleinrichtung, deren Signalübertragungsweg für das Fahrtsignal gestört ist. Bei Unterbrechungen im Lenkkreis kann das Fahrzeug vom Fahrer nicht beherrscht werden. Wenn der Fahrer nun instinktiv mit der Lenkung voll gegensteuert, so erreicht er allenfalls ein Abbremsen der gegenüberliegenden Kette, nicht jedoch die in einer derartigen Fahrsituation nötige Gegenkurve, um das Kettenfahrzeug wieder auf den ursprünglichen Kurs zu bringen. Da üblicherweise bei Kettenfahrzeugen relativ grosse Entfernungen zwischen den Steuerhebeln und den Verstelleinrichtungen für die Hydraulikpumpen liegen, ist die Gefahr der Störung einer Signalübertragung dementsprechend gross. Diese Gefahr besteht sowohl bei elektrischer Signalübertragung wie auch bei hydraulischer Signalübertragung.

Gegenüber diesem Stand der Technik liegt der vorliegenden Erfindung die Aufgabe zugrunde, ein Steuergerät nach dem Oberbegriff des Anspruchs 1 so weiter zu bilden, dass eine gefährliche Fahrsituation bei Störung eines Signalübertragungsweges zwischen dem Steuergerät und der Verstelleinrichtung vermieden wird.

Diese Aufgabe wird bei einem Steuergerät nach dem Oberbegriff des Anspruchs 1 durch die kennzeichnenden Merkmale des Anspruchs 1 gelöst.

Die vorliegende Erfindung basiert auf dem technischen Grundgedanken, dass die gefährlichen Situationen, die bei mit dem Steuergerät nach dem Stand der Technik ausgerüsteten Kettenfahrzeugen auftreten konnten, dadurch bedingt sind, dass ein im Moment der Unterbrechung der Signalübertragung zwischen Steuergerät und Verstelleinrichtung auftretendes Kurvenfahren des Kettenfahrzeugs nicht durch Gegenlenken korrigiert werden kann, da die maximale Wirkung des Lenksignals auf die Verstelleinrichtung niemals grösser ist als diejenige des Fahrtsignals. Erfindungsgemäss werden die bei dem Stand der Technik zwischen dem Steuergerät und den Verstelleinrichtungen übertragenen, voneinander unabhängigen Lenk- und Fahrtgeschwindigkeitssignale durch wenigstens zwei zueinander proportionale Signale ersetzt, wobei die Verstelleinrichtung und/oder die Hydraulikpumpen derart ausgebildet sind, dass die Antriebsgeschwindigkeit einer Antriebseinheit bei Ausfall eines Signales von den wenigstens zwei diese Antriebseinheit steuernden Signalen proportional zu der Antriebsgeschwindigkeit ist, die diese Antriebseinheit bei störungsfreier Signalzuführung hat.

Beispielsweise können zwei identische Signale vom Steuergerät aus der Verstelleinrichtung zugeführt werden, die jeweils proportional zur Summe des Fahrt- und Lenksignales sind. Die Verstelleinrichtung kann in diesem Fall so ausgebildet sein, dass sie bei Ausfall eines der beiden Signale derart reagiert, dass die sich ergebende Antriebsgeschwindigkeit der entsprechenden Antriebseinheit nunmehr 50% der Antriebsgeschwindigkeit beträgt, die diese Antriebseinheit bei störungsfreier Zuführung beider Signale hätte. Eine derartige Abweichung kann leicht durch Gegensteuern korrigiert werden, wobei jedoch die Bedienungsperson des Kettenfahrzeugs durch das nunmehr veränderte Lenkverhalten des Ket-

2

tenfahrzeugs auf den vorliegenden Fehler aufmerksam gemacht wird. Ebenso können drei oder mehr identische Signale oder zueinander proportionale Signale zur Signalübertragung zwischen dem Steuergerät und der Verstelleinrichtung einer jeden Hydraulikpumpe verwendet werden.

Gemäss der bevorzugten Weiterbildung nach Anspruch 2 sind zwei voneinander unabhängige Hydrauliksysteme pro Antriebseinheit des Kettenfahrzeugs vorgesehen. Jedes Hydrauliksystem ist mit dem auf der gleichen Seite des Kettenfahrzeugs liegenden Hydrauliksystem strömungsmässig parallel geschaltet, so dass jeweils zwei Hydraulikpumpen einen Hydromotor mit Strömungsmittel versorgen. Jeder Hydraulikpumpe ist eine Verstelleinrichtung zugeordnet, die ihrerseits durch ein Steuersignal vom Steuergerät betätigt wird. Bei Unterbrechung oder Kurzschluss eines Signalübertragungsweges zwischen dem Steuergerät und einer der beiden Verstelleinrichtungen auf einer Fahrzeugseite wird die Hydraulikdurchflussmenge der dieser Verstelleinrichtung zugeordneten Hydraulikpumpe auf Null abfallen, während die andere Hydraulikpumpe unverändert weiterarbeitet. Im Fall von zwei unabhängigen Hydrauliksystemen auf einer Fahrzeugseite führt dies zu einer Reduktion der Antriebsgeschwindigkeit der entsprechenden Antriebskette auf 50%. Im Fall von vier unabhängigen Hydrauliksystemen vermindert sich die Antriebsgeschwindigkeit der Antriebskette lediglich um 25%. In jedem Fall wird ein von Störungen in der Signalübertragung ungefährdetes Fahrverhalten erreicht.

In den Ansprüchen 3 und 4 beschriebene bevorzugte Weiterbildung ermöglicht eine einfache Trennung der übertragenen Signale. Darüberhinaus kann beispielsweise im Fall von Servoverstellgeräten mit jeweils zwei Spulen auf Servoverstellgeräte zurückgegriffen werden, wie sie bereits bei dem Steuergerät und dem Kettenfahrzeug nach dem Stand der Technik eingesetzt worden sind.

Die bevorzugte Weiterbildung nach Anspruch 5 führt zu einer besonders einfachen Überlagerung der Wirkung der beiden Steuersignale.

Die Weiterbildung nach Anspruch 6 gewährleistet eine weitere Steigerung der Fahrsicherheit, da eine Störung in der Signalübertragung in jedem Signalübertragungsweg zu der gleichen, vorhersehbaren Abänderung des Fahrverhaltens des Kettenfahrzeugs führt.

Die in Anspruch 7 beschriebene Weiterbildung ermöglicht bei einer minimalen Anzahl von elektrischen Bauteilen unter Beibehaltung der beim Steuergerät für ein Kettenfahrzeug nach dem Stand der Technik verwendeten mechanischen Bauteile eine einfache Realisierung des erfindungsgemässen Prinzips bei Verwendung von redundanter Signalübertragung ohne Erhöhung der Anzahl von Steuerleitungen gegenüber der Anzahl der im Stand der Technik verwendeten Steuerleitungen.

Bei der bevorzugten Weiterbildung nach Anspruch 8 wird eine völlige Unabhängigkeit des jeweils verbleibenden Signales von dem gestörten Signal auch im Kurzschlussfall erreicht.

Ausführungsformen des Standes der Technik sowie bevorzugte Ausführungsbeispiele gemäss der vorliegenden Erfindung werden nachfolgend unter Bezugnahme auf die beiliegenden Zeichnungen näher beschrieben. Es zeigen:

Figur 1 eine perspektivische Darstellung eines Kettenfahrzeugs unter Hervorhebung der hydraulischen Aggregate;

Figur 2 ein Prinzipschaltbild einer Steuerschaltung nach dem Stand der Technik;

Figur 3 ein Ausführungsbeispiel eines erfindungsgemässen Steuergerätes;

Figur 4 ein weiteres Ausführungsbeispiel eines erfindungsgemässen Steuergerätes;

Figur 5a–c Vektordarstellungen des Lenkverhaltens eines mit der Steuerschaltung nach den Figuren 3 und 4 ausgerüsteten Kettenfahrzeugs bei Ausfall eines Signalübertragungsweges;

Figur 6a–c Vektordarstellungen des Lenkverhaltens eines mit der Steuerschaltung nach den Figuren 3 und 4 ausgerüsteten Kettenfahrzeugs bei gleichzeitigem Ausfall von zwei Signalübertragungswegen;

Figur 7a–b Vektordarstellungen des Lenkverhaltens eines mit der Steuerschaltung nach den Figuren 3 und 4 ausgerüsteten Kettenfahrzeugs bei Umschaltung von Vorwärtsfahrt auf Rückwärtsfahrt.

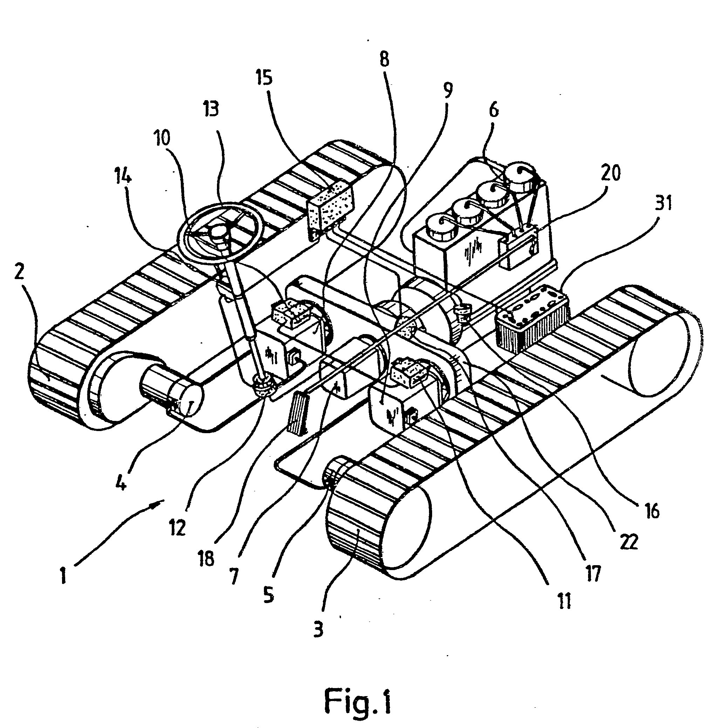

Figur 1 zeigt eine perspektivische Darstellung eines Kettenfahrzeugs 1 bei zeichnerischer Hervorhebung des elektrischen Steuersystems und des hydraulischen Antriebssystems dieses Kettenfahrzeugs 1. Das Kettenfahrzeug 1 hat eine linke Antriebskette 2 und eine rechte Antriebskette 3, die jeweils von einem linken und einem rechten Hydromotor 4, 5 über ein nicht dargestelltes Ketten-Untersetzungsgetriebe angetrieben werden. Das Kettenfahrzeug 1 hat einen Antriebsmotor 6, der über ein Getriebe eine Arbeitspumpe 7, eine linke Verstellpumpe 8 und eine rechte Verstellpumpe 9 antreibt. Die von den Verstellpumpen 8, 9 geförderte Hydraulikdurchflussmenge wird durch ein der linken Verstellpumpe 8 zugeordnetes linkes Servoverstellgerät 10 und ein der rechten Verstellpumpe 9 zugeordnetes rechtes Servoverstellgerät 11 gesteuert. Üblicherweise ist das Servoverstellgerät derart ausgelegt, dass ein im wesentlichen linearer Zusammenhang zwischen dem Eingangssteuerstrom des Servoverstellgerätes und der geförderten Hydraulikdurchflussmenge der Verstellpumpe 8, 9 besteht. Die Verstellpumpen 8, 9 liegen in einem Hydraulikkreis mit dem ihnen zugeordneten Hydromotor 4, 5. Zum Lenken des Kettenfahrzeugs 1 dient ein von einem Lenkrad 13 betätigter Lenkgeber 12, der als Potentiometer ausgeführt ist. Die Fahrtrichtung wird mit einem in der Nähe des Lenkrades 13 angeordneten Fahrtrichtungsschalter 14 vorgenommen. Der Lenkgeber 12 und der Fahrtrichtungsschalter 14 stehen in Signalübertragungsverbindung mit einer Fahrelektronik 15. Die momentane Drehzahl des Antriebsmotors 6 wird von einem Drehzahl-Istwertgeber 16 gemessen. Der Istwertgeber 16 führt diese Information der Fahrelektronik 15 zu. Ein Drehzahl-Sollwertgeber 17 sowie eine Einspritzpumpe 20 sind über ein Gaspedal 18 betätigbar.

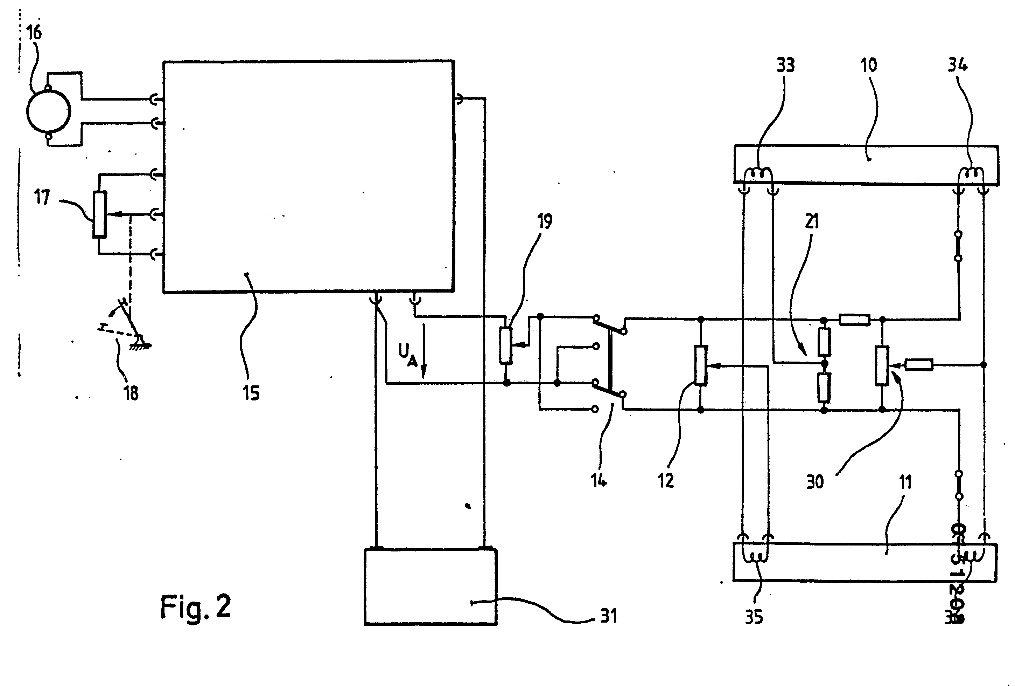

Das in Figur 1 dargestellte Kettenfahrzeug 1 arbeitet mit der in der Figur 2 dargestellten Steuerschaltung nach dem Stand der Technik. Ein Kettenfahrzeug des in Figur 1 gezeigten Types kann, ohne dass hierzu irgendwelche mechanische oder hydraulische Teile abgewandelt werden müssen, mit dem erfindungsgemässen Steuergerät ausgerüstet werden.

In diesem Zusammenhang sei darauf hingewiesen, dass das Anwendungsgebiet des erfindungsgemässen Steuergerätes nicht auf Kettenfahrzeuge begrenzt ist, da das erfindungsgemässe Steuergerät unter Beibehaltung sämtlicher vorteilhafter Wirkungen gegenüber dem Steuergerät nach dem Stand der Technik auch bei einem Radfahrzeug eingesetzt werden kann, dessen Lenkung durch Einstellung der Differenzgeschwindigkeit zwischen einem linksseitigen und einem rechtsseitigem Radsatz vorgenommen wird. Derart gelenkte Radfahrzeuge werden insbesondere für den Baustellen- und Gelände-Fahrbetrieb eingesetzt.

Figur 2 zeigt ein Steuergerät nach dem Stand der Technik, das bei dem in Figur 1 gezeigten Kettenfahrzeug eingesetzt wird. Mit dem Gaspedal 18, das ebenfalls in Figur 1 gezeigt ist, ist der gleichfalls in Figur 1 angezeigte Drehzahl-Sollwertgeber 17, der als Potentiometer ausgeführt ist, einstellbar. Dieser Drehzahl-Sollwertgeber 17 sowie ein Drehzahl-Istwertgeber 16 sind an einer an sich im Stand der Technik bekannten, und für die vorliegende Erfindung nicht relevante Fahrelektronik 15 angeschlossen. Die Fahrelektronik 15 führt in einer an sich im Stand der Technik bekannten Weise in Abhängigkeit vom Belastungszustand des Motors sowie von der Abweichung zwischen dem Signal des Drehzahl-Istwertgebers und des Drehzahl-Sollwertgebers über eine entsprechende Einstellung der Ausgangsspannung $U_A$ eine Regelung der Geschwindigkeit des Kettenfahrzeugs 1 durch. Je höher die Ausgangsspannung $U_A$ der Fahrelektronik 15 ist, desto höher ist die Hydraulikdurchflussmenge der linken und rechten Verstellpumpe 8, 9, die von dem linken und rechten Servoverstellgerät 10, 11 angesteuert werden. Bei zu starkem Abfall der Istdrehzahl gegenüber der Solldrehzahl vermindert die Fahrelektronik 15 ihre Ausgangsspannung $U_A$, um die Fahrgeschwindigkeit und um damit die Motorbelastung zu vermindern.

Die in Figur 2 gezeigte Steuerschaltung nach dem Stand der Technik enthält ein die Ausgangsspannung $U_A$ der Fahrelektronik 15 teilendes Geschwindigkeitspotentiometer 19, das auch als «Inchpotentiometer» bezeichnet wird. Dieses Potentiometer ist an ein Handrad angeschlossen, mit dem die Bedienungsperson des Kettenfahrzeugs 1 die gewünschte Fahrgeschwindigkeit einstellt. Bei hohen Fahrwiderständen, wie beispielsweise beim Bergauffahren des Kettenfahrzeugs 1 wird das Geschwindigkeitspotentiometer so eingestellt, dass an dessen Ausgangsseite lediglich ein kleiner Teil der Spannung $U_A$ erscheint. Das Geschwindigkeitspotentiometer 19 ist ausgangsseitig an einen als Doppelumschalter ausgeführten Fahrtrichtungsschalter 14 angeschlossen.

Eine Batterie bzw. ein Akkumulator 31 übernimmt die Energieversorgung der Fahrelektronik 15 sowie der an die Fahrelektronik 15 angeschlossenen Schaltung.

Jedes Servoverstellgerät 10, 11 enthält zwei Spulen 33, 34; 35, 36, wobei die Betätigung der Servoverstellgeräte 10, 11 zur Steuerung der Verstellpumpen 8, 9 jeweils proportional zur Summe der den Spulen 33, 34; 35, 36 zugeführten Ströme ist. Das in Fahrtrichtung linksseitige Servoverstellgerät 10 hat also eine erste Spule 33, die als Lenkspule 33 bezeichnet wird, und eine zweite Spule 34, die als Fahrspule bezeichnet wird. Entsprechend weist das rechte Servoverstellgerät eine erste Spule 35 auf, die als Lenkspule bezeichnet wird, und eine zweite Spule 36 auf, die wiederum als Fahrspule bezeichnet wird.

Der Lenkgeber 12, der als Potentiometer ausgeführt ist, liegt parallel zum Ausgang des Fahrtrichtungsschalters 14. Der Mittelabgriff bzw. Schleifer des Lenkpotentiometers 12 ist an die rechte Lenkspule 35 angeschlossen, die in Reihe zu der linken Längsspule 33 liegt. Die Reihenschaltung der Lenkspulen 33, 35 ist mit einer derartigen Polung der Spulen 33, 35 vorgenommen, das ein die Spulen 33, 35 durchfliessender Strom zu einer entgegengesetzten Betätigung der zugehörigen Servoverstellgeräte 10, 11 führt. Das der Spule 35 abgewandte Ende der Spule 33 ist an einen Festspannungsteiler 21 angeschlossen, der wiederum parallel zum Lenkpotentiometer 12 liegt. Damit durchsetzt die Spulen 33, 35 ein Strom, der proportional zur Abweichung der Lage des Schleifers des Lenkpotentiometers 12 von dessen Mittenstellung ist.

Parallel zum Spannungsteiler 21 liegt über einen Reihenwiderstand eine als Potentiometer ausgeführte Geradetrimmschaltung 30. Zwischen dem Mittelabgriff und je einem Endkontakt des Potentiometers 30 ist die linke bzw. die rechte Fahrspule 34, 36 geschaltet. Der jeweilige Strom durch die Fahrspulen 34, 36 ist proportional zur Ausgangsspannung $U_A$ der Fahrelektronik 15. Der Geradeauslauf des Kettenfahrzeugs 1 kann durch Einstellen des Potentiometers 30 korrigiert werden.

Bei einem Lenkeinschlag am Lenkgeber 12 fliesst ein Strom durch die linke und rechte Lenkspule 33, 35, wobei das magnetische Feld in der linken Lenkspule 33 die entgegengesetzte Richtung des Feldes in der rechten Lenkspule 35 hat. Entsprechend wird bei einem Lenkeinschlag das linke Servoverstellgerät in entgegengesetzter Richtung wie das rechte Servoverstellgerät betätigt.

Wird nun beispielsweise eine der Zuführungsleitungen zu der Fahrspule 34 durch einen Schaden der Leitung unterbrochen, so sinkt die Erregung des Servoverstellgerätes 10 schlagartig ab. Durch den nunmehr fehlenden parallelen Stromweg vom oberen Punkt des Potentiometers 30 bis zu dessen Mittelabgriff steigt das Potential am Mittelabgriff des Potentiometers 30 an. Dieser Effekt führt zu einer Erhöhung des durch die Fahrspule 36 des gegenüberliegenden Servoverstellgerätes 11 fliessendes Stromes. Die auf diese Weise erzeugte starke Assymmetrie der Erregungen der Servoverstellgeräte 10, 11 führt zu einer abrupten Kurvenfahrt des Kettenfahrzeugs, die auch bei maximalen Gegenlenken mit dem Lenkgeber 12 nicht kompensiert werden kann.

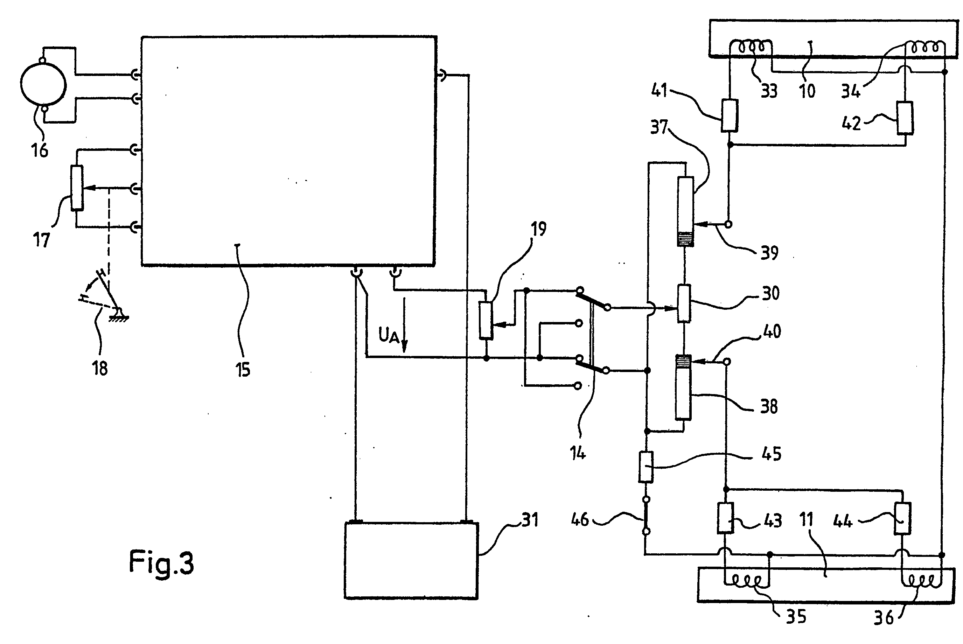

Nachfolgend wird unter Bezugnahme auf die Figur 3 ein Ausführungsbeispiel gemäss der vorliegenden Erfindung detailliert beschrieben, wobei jedoch die Beschreibung derjenigen Teile der Schaltung, die mit den beschriebenen Schaltungsteilen des Gerätes des Standes der Technik übereinstimmen, fortgelassen wird. Ein linkes Lenkpotentiometer 37 und ein rechtes Lenkpotentiometer 38 sind an die äusseren Kontakte des Geradetrimmungspotentiometers 30 angeschlossen, dessen Mittelabgriff mit einem ausgangsseitigen Kontakt des Fahrtrichtungsumschalters 14 verbunden ist. Der gegenüberliegende ausgangsseitige Kontakt des Fahrtrichtungsumschalters 14 ist mit den jeweiligen anderen Aussenkontakten der Lenkpotentiometer 37, 38 verbunden. Beide Lenkpotentiometer 37, 38 bestehen aus einem Widerstandsbereich (hell dargestellt) und einem metallischen Bereich (dunkel dargestellt), wobei die jeweiligen Abgriffe bzw. Schleifer 39, 40 den Grenzbereich zwischen dem metallischen Bereich und dem Widerstandsbereich dann durchlaufen, wenn das Lenkrad 13 die neutrale oder Mittenstellung durchläuft. Die Abgriffe 39, 40 liegen an gemeinsamen Fusspunkten von Serienwiderständen 41, 42; 43, 44, die mit jeweils einem Ende der Spulen 33, 34; 35, 36 verbunden sind. Das andere Ende dieser Spulen 33–36 ist über einen gemeinsamen Fusspunkt mit einem Lenkradschalter 46 verbunden, der bei maximalem Lenkradeinschlag geöffnet wird. Der andere Kontakt des Lenkradschalters 46 ist über einen Widerstand 45 mit dem gemeinsamen Punkt der Lenkradpotentiometer 37, 38 verbunden. Bei maximalem Lenkradeinschlag wird der Lenkradschalter 46 geöffnet, wobei die ansonsten parallel liegenden Spulen 33, 34; 35, 36 paarweise in Reihe geschaltet werden.

In Abweichung von dem dargestellten Ausführungsbeispiel können pro Servoverstellgerät 10, 11 drei oder mehr Spulen mit entsprechenden Serienwiderständen parallel zu den Spulen 33, 34 und Serienwiderständen 41, 42 geschaltet werden.

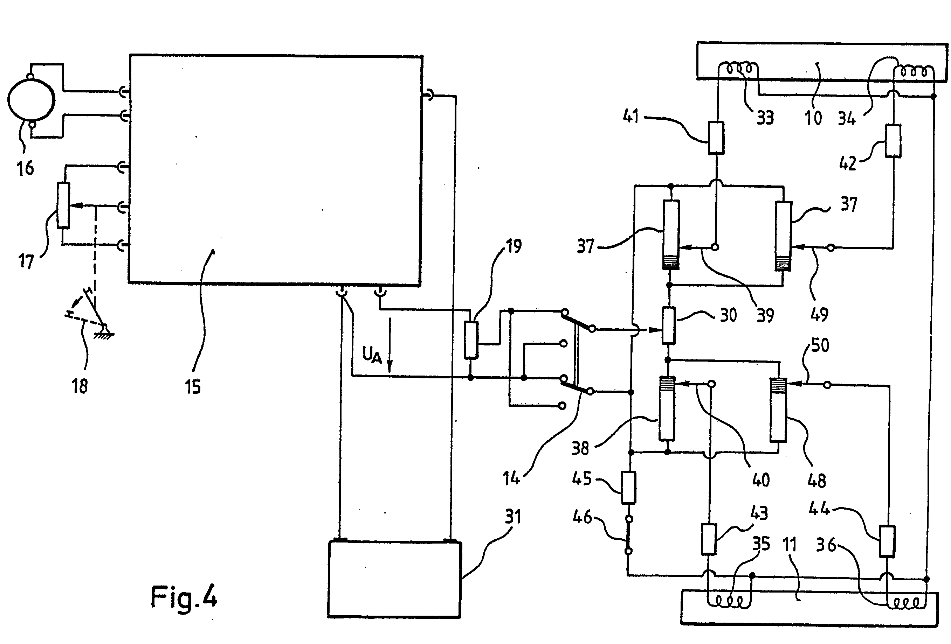

Eine gegenüber dem in Figur 3 gezeigten Ausführungsbeispiel erhöhte Betriebssicherheit wird mit dem in Figur 4 gezeigten Ausführungsbeispiel des erfindungsgemässen Steuergerätes erreicht. Zusätzlich zu den elektrischen Bauteilen des Ausführungsbeispiels gemäss Figur 3 sind ein weiteres, linkes Lenkpotentiometer 47 und ein weiteres, rechtes Lenkpotentiometer 48 vorgesehen, deren Aufbau demjenigen der Lenkpotentiometer 37, 38 entspricht. Die jeweiligen linken Lenkpotentiometer 37, 47 sind mit den Aussenklemmen parallel geschaltet, ebenso die beiden rechten Lenkpotentiometer 38, 48 mit ihren Ausgangsklemmen parallel geschaltet sind. Der Abgriff 49 des linken, weiteren Potentiometers 47 ist mit dem der Spule 34 abgewandten Ende des Serienwiderstandes 42 verbunden, während der Abgriff 50 des weiteren rechten Lenkpotentiometers 48 mit dem der Spule 36 abgewandten Ende des Serienwiderstandes 44 verbunden ist. Eine derartige Schaltung führt zu einer Erhöhung der Betriebssicherheit durch Erhöhung der Redundanz der Schaltung, während gleichzeitig ein vermindertes Ansprechen der Schaltung gegenüber Kurzschlüssen in den Leitungen nahe den Anschlüssen der Spulen 33, 34; 35, 36 erreicht wird.

Selbstverständlich können drei oder auch mehr Lenkpotentiometer zur Speisung von drei oder mehr Spulen pro Antriebseinheit parallel geschaltet werden.

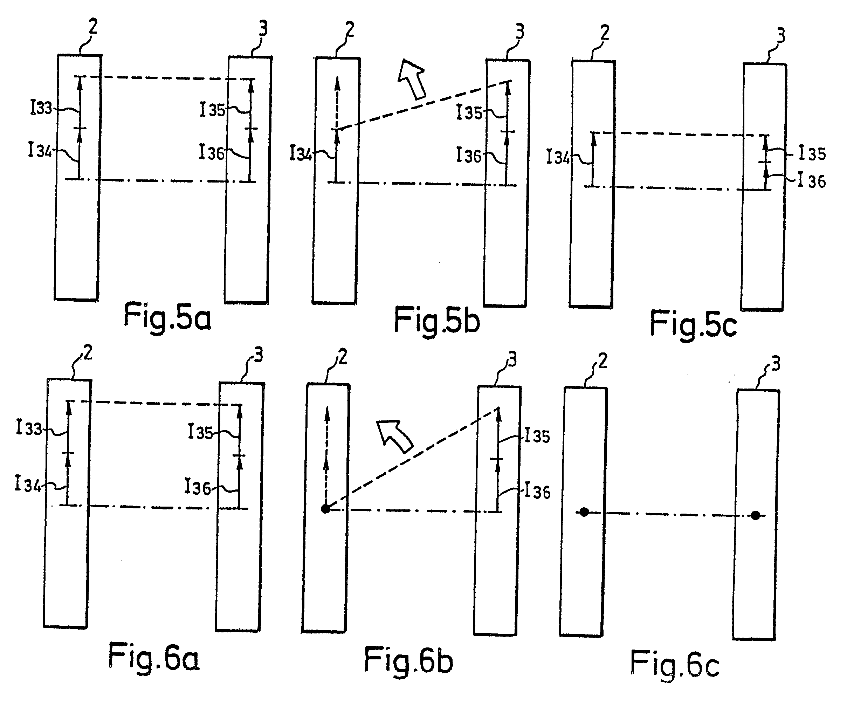

Figur 5a, Figur 5b und Figur 5c zeigen Vektordarstellungen des Lenkverhaltens des Kettenfahrzeugs bei Unterbrechung der Verbindung zwischen der Spule 33 und dem innerhalb des Steuergerätes liegenden Serienwiderstand 41. In Figur 5a ist der Fahrzustand des Kettenfahrzeugs dargestellt, der sich aus der Amplitude der durch die Spulen 33–36 fliessenden Ströme $I_{33}$–$I_{36}$ ergibt. Da alle Einzelströme die gleiche Amplitude haben, entspricht dieser Darstellung eine Geradeausfahrt des Kettenfahrzeugs. Wenn nun eine Unterbrechung zwischen der Spule 33 und dem Serienwiderstand 41 auftritt, vermindert sich die Antriebsgeschwindigkeit der linksseitigen Antriebskette 2 auf die Hälfte des vorherigen Wertes. Dieser Zustand ist in der Figur 5b durch die gestrichelten Linien dargestellt. Da die rechtsseitigen Ströme $I_{35}$, $I_{36}$ noch unverändert sind, bleibt die Antriebsgeschwindigkeit der rechten Antriebskette 3 unverändert. Durch einen Lenkeinschlag, der dem halben maximalen Lenkeinschlag entspricht, kann die Bedienungsperson des Kettenfahrzeugs 1 den Geradeausfahrtzustand herstellen, der in Figur 5c dargestellt ist. Gleichzeitig wird der Bedienungsperson der vorliegende technische Fehler bewusst.

Die Vektordarstellung gemäss Figur 6a zeigt wiederum den in Figur 5a dargestellten Geradeausfahrtzustand des Kettenfahrzeugs 1. Figur 6b zeigt den in der Praxis wohl extrem unwahrscheinlichen Ausnahmezustand, das gleichzeitig sowohl die Verbindung zwischen dem Steuergerät und der Spule 33 wie auch die Verbindung zwischen dem Steuergerät und der Spule 34 unterbrochen wird. Lediglich in diesem extremen Fall kommt die längsseitige Antriebskette 2 schlagartig zum Stehen. Jedoch kann die Bedienungsperson des Kettenfahrzeugs durch maximales Gegenlenken den in Figur 6c dargestellten Bremszustand bzw. Anhaltezustand des Kettenfahrzeugs erreichen. Bei einer Unterbrechung der Signalwege zu dem linksseitigen Servoverstellgerät führt das Kettenfahrzeug also zunächst die in Figur 6b angedeutete Linksbewegung durch, die die Bedienungsperson des Kettenfahrzeugs entsprechend der natürlichen Gegenreaktion durch einen maximalen Lenkeinschlag nach rechts korrigieren kann.

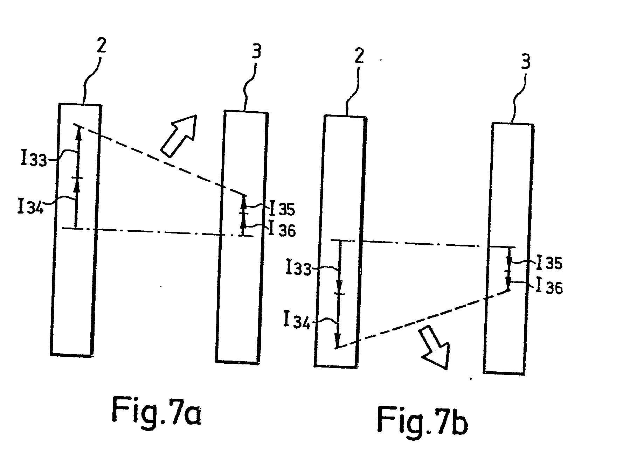

Unter Bezugnahme auf die Figuren 7a und 7b sei nachfolgend kurz erläutert, dass mit einer dem Steuergerät nach den Figuren 3 und 4 entsprechenden Schaltungsanordnung ein Vorwärts-/ Rückwärts-Fahrverhalten erreicht wird, das weitgehend dem Fahrverhalten eines normalen Automobils gleicht. Die Umschaltung des Fahrtrichtungsumschalters 14 führt zu einer Umpolung der Ströme $I_{33}$–$I_{36}$ unter Beibehaltung der Amplitude dieser Ströme. Dementsprechend ändert sich zwar die Antriebsrichtung der Antriebsketten 2, 3, jedoch bleibt der Betrag der jeweiligen Antriebsgeschwindigkeit der Antriebsketten 2, 3 unverändert. Daher führt ein Kettenfahrzeug mit dem beispielhaft in den Figuren 3 und 4 dargestellten Steuergerät ein Vorwärts-/Rückwärts-Fahrverhalten durch, das der Erwartungshaltung eines autofahrenden Benutzers des Kettenfahrzeugs entspricht.

Das erfindungsgemässe Steuergerät kann ebenfalls bei einem Radfahrzeug eingesetzt werden, das durch Einstellung einer Differenzgeschwindigkeit des linken Radsatzes zum rechten Radsatz gelenkt wird.

Gleichfalls kann das beschriebene, elektrisch arbeitende Steuergerät durch ein rein hydraulisch arbeitendes Steuergerät ersetzt werden.

## Patentansprüche

1. Steuergerät zum Steuern der Fahrtrichtung und Geschwindigkeit eines Fahrzeugs aufgrund eines Lenkeinschlages und eines Geschwindigkeitssignales $U_A$, insbesondere für ein Kettenfahrzeug (1), mit wenigstens zwei von einem Motor (6) angetriebenen Hydraulikpumpen (8, 9),

mit Antriebseinheiten (2, 4; 3, 5), die mit Hydraulikpumpen (8, 9) in Strömungsverbindung stehen, und

mit Verstelleinrichtungen (10, 11), die die Hydraulikdurchflussmenge der Hydraulikpumpen (8, 9) in Abhängigkeit von von dem Steuergerät empfangenen Signalen steuern,

dadurch gekennzeichnet,

dass das Steuergerät zum Steuern der jeweiligen Antriebsgeschwindigkeiten der Antriebseinheiten für jede Antriebseinheit (2, 4; 3, 5) wenigstens zwei zueinander proportionale Signale erzeugt,

dass jedes der Signale sowohl vom Lenkeinschlag als auch vom Geschwindigkeitssignal $U_A$ abhängt, und

dass die Verstelleinrichtung (10, 11) und/oder die Hydraulikpumpen (8, 9) derart ausgebildet sind, dass die Antriebsgeschwindigkeit einer Antriebseinheit bei Ausfall eines Signales von den wenigstens zwei diese Antriebseinheit (2, 4; 3, 5) steuernden Signalen proportional zu der Antriebsgeschwindigkeit ist, die diese Antriebseinheit (2, 4; 3, 5) bei störungsfreier Signalzuführung hat.

2. Steuergerät nach Anspruch 1, dadurch gekennzeichnet, dass für jede Antriebseinheit (2, 4; 3, 5) wenigstens zwei Hydraulikpumpen (8, 9) mit jeweils einer Verstelleinrichtung (10, 11) vorgesehen sind, dass die Hydraulikpumpen (8, 9)

strömungsmässig parallel geschaltet sind, und dass jedes Signal jeweils eine Verstelleinrichtung (10, 11) steuert.

3. Steuergerät nach Anspruch 1, dadurch gekennzeichnet, dass die Verstelleinrichtung (10, 11) eine Anzahl von Betätigungselementen (33–36) aufweist, die mit der Anzahl der erzeugten Signale entspricht.

4. Steuergerät nach Anspruch 3, dadurch gekennzeichnet, dass die Verstelleinrichtungen Servoverstellgeräte (10, 11) sind, dass die Betätigungselemente Spulen (33–36) sind, und dass die Signale Steuerströme sind.

5. Steuergerät nach Anspruch 4, dadurch gekennzeichnet, dass die Spulen (33–36) einen gemeinsamen magnetischen Kreis des Servoverstellgerätes (10, 11) erregen.

6. Steuergerät nach Anspruch 4 oder 5, dadurch gekennzeichnet, dass jeder der den Spulen (33–36) eines Servoverstellgerätes (10, 11) zugeführte Steuerstrom gleich gross ist.

7. Steuergerät nach einem der Ansprüche 4 bis 6, dadurch gekennzeichnet, dass das Steuergerät zwei mit einer zu der gewünschten Fahrgeschwindigkeit proportionalen Spannung gespeiste Potentiometer (37, 38), deren Abgriffe (39, 40) entsprechend einem gewünschten Lenkwinkel bewegbar sind, aufweist, und dass das Steuergerät zwei mit den Abgriffen (39, 40) verbundene Stromteilerschaltungen (41–44), an denen die Spulen (33, 34; 35, 36) angeschlossen sind, enthält.

8. Steuergerät nach einem der Ansprüche 4 bis 6, dadurch gekennzeichnet, dass das Steuergerät eine der Anzahl von Spulen (33–36) entsprechende Anzahl von Lenkpotentiometern (37, 38; 47, 48), die mit zu der gewünschten Fahrtgeschwindigkeit proportionalen Spannungen gespeist werden, aufweist, dass die Abgriffe (39, 40, 49, 50) der Spulen (33–36) entsprechend dem gewünschten Lenkwinkel bewegbar sind, und dass die Spulen (33–36) an die Abgriffe (39, 40, 49, 50) angeschlossen sind.

## Revendications

1. Appareil de commande destiné à la commande de la direction de marche et de la vitesse d'un véhicule sur la base du braquage et d'un signal de vitesse $U_A$, en particulier pour un véhicule chenillé (1) possédant au moins deux pompes hydrauliques (8, 9) entraînées par un moteur (6),

comprenant des unités d'entraînement (2, 4; 3, 5) qui sont en communication fluidique avec les pompes hydrauliques (8, 9) et

des dispositifs de correction (10, 11) qui commandent le débit hydraulique des pompes hydrauliques (8, 9) en fonction de signaux reçus en provenance de l'appareil de commande,

caractérisé en ce que l'appareil de commande servant à la commande des vitesses d'entraînement respectives des unités d'entraînement produit pour chaque unité d'entraînement (2, 4; 3, 5) au moins deux signaux proportionnels l'un à l'autre,

en ce que chacun des signaux dépend aussi bien du braquage que du signal de vitesse ($U_A$), et

en ce que le dispositif de correction (10, 11) et/ou les pompes hydrauliques (8, 9) sont construits de manière que la vitesse d'entraînement d'une unité d'entraînement, dans le cas de défaillance d'un signal qui fait partie des au moins deux signaux qui commandent cette unité d'entraînement (2, 4; 3, 5) soit proportionnelle à la vitesse d'entraînement que cette unité d'entraînement (2, 4; 3, 5) possède si la transmission des signaux est exempte de perturbations.

2. Appareil de commande selon la revendication 1, caractérisé en ce que, pour chaque unité d'entraînement (2, 4; 3, 5) sont prévues au moins deux pompes hydrauliques (8, 9) équipées chacune d'un dispositif de correction (10, 11) en ce que les pompes hydrauliques (8, 9) sont branchées en parallèle pour l'écoulement du fluide, et en ce que chaque signal commande un dispositif de correction respectif (10, 11).

3. Appareil de commande selon la revendication 1, caractérisé en ce que le dispositif de correction (10, 11) comprend un nombre d'éléments d'actionnement (33–36) qui correspond au nombre des signaux produits.

4. Appareil de commande selon la revendication 3, caractérisé en ce que les dispositifs de correction sont des servo-correcteurs (10, 11), en ce que les éléments d'actionnement sont des bobines (33–36), et en ce que les signaux sont des courants de commande.

5. Appareil de commande selon la revendication 4, caractérisé en ce que les bobines (33–36) excitent un circuit magnétique commun du servo-correcteur (10, 11).

6. Appareil de commande selon la revendication 4 ou 5, caractérisé en ce que tous les courants de commande envoyés aux bobines (33–36) d'un servo-correcteur (10, 11) sont de même valeur.

7. Appareil de commande selon l'une des revendications 4 à 6, caractérisé en ce que l'appareil de commande présente deux potentiomètres (37, 38) alimentés avec une tension proportionnelle à la vitesse de marche désirée, dont les prises (39, 40) se déplacent en fonction de l'angle de braquage désiré, et en ce que l'appareil de commande comprend deux circuits diviseurs de courant (41–44) connectés aux prises (39, 40) et auxquels les bobines (33, 34; 35, 36) sont connectées.

8. Appareil de commande selon l'une des revendications 4 à 6, caractérisé en ce que l'appareil de commande comprend un nombre de potentiomètres de direction (37, 38; 47, 48) qui correspond au nombre des bobines (33–36), potentiomètres qui sont alimentés avec des tensions proportionnelles à la vitesse de marche désirée, en ce que les prises (39, 40; 49, 50) des bobines (33–36) se déplacent en fonction de l'angle de direction désiré, et en ce que les bobines (33–36) sont connectées aux prises (39, 40, 49, 50).

**Claims**

1. A control device for controlling the direction of travel and speed of a vehicle on the basis of a steering lock and of a speed signal $U_A$, more particularly for a tracked vehicle (1), comprising at least two hydraulic pumps (8, 9) driven by a motor (6),

with drive units (2, 4; 3, 5), which are connected to hydraulic pumps (8, 9) in respect of flow, and

with adjusting means (10, 11) which control the hydraulic rate of flow of the hydraulic pumps (8, 9) in dependence on signals received by the control device,

characterised in that in order to control the respective drive speeds of the drive units the control device generates at least two signals proportional to one another for each drive unit (2, 4; 3, 5),

each of the signals depends both on the steering lock and on the speed signal $U_A$, and

the adjustment means (10, 11) and/or the hydraulic pumps (8, 9) are so constructed that the drive speed of a drive unit in the absence of one of the at least two signals controlling said drive unit (2, 4; 3, 5) is proportional to the drive speed that the said drive unit (2, 4; 3, 5) has when the signals are supplied without any malfunction.

2. A control device according to claim 1, characterised in that at least two hydraulic pumps (8, 9) each having an adjustment means (10, 11) are provided for each drive unit (2, 4; 3, 5), the hydraulic pumps (8, 9) are connected in parallel in respect of flow, and each signal controls an adjustment means (10, 11) respectively.

3. A control device according to claim 1, characterised in that the adjustment means (10, 11) comprises a number of actuating elements (33–36) corresponding to the number of signals generated.

4. A control devic according to claim 3, characterised in that the adjustment means are servo adjustment devices (10, 11), the actuating elements are coils (33–36) and the signals are control currents.

5. A control device according to claim 4, characterised in that the coils (33–36) energize a common magnetic circuit of the servo adjustment device (10, 11).

6. A control device according to claim 4 or 5, characterised in that each of the control currents fed to the coils (33–36) of a servo adjustment device (10, 11) is identical in value.

7. A control device according to any one of claims 4 to 6, characterised in that the control device comprises two potentiometers (37, 38) which are fed with a voltage proportional to the required speed of travel and the tappings (39, 40) of which are movable in accordance with a required steering angle, and the control device comprises two current divider circuits (41–44) which are connected to the tappings (39, 40) and to which the coils (33, 34; 35, 36) are connected.

8. A control device according to any of claims 4 to 6, characterised in that the control device comprises a number of steering potentiometers (37, 38; 47, 48) corresponding to the number of coils (33–36), said potentiometers being fed with voltages proportional to the required speed of travel, the tappings (39, 40, 49, 50) of the coils (33–36) are movable in accordance with the required steering angle, and the coils (33–36) are connected to the tappings (39, 40, 49, 50).

Fig.1

Fig. 2

$U_A$

0 151 208

Fig.3

4/6

Fig.4

Fig.5c

Fig.5b

Fig.5a

Fig.6c

Fig.6b

Fig.6a

Fig.7a                    Fig.7b